# EUROPEAN PATENT APPLICATION

(11) **EP 4 667 832 A1**
(43) Date of publication of application: **24.12.2025**
(21) Application number: 25184310.8
(22) Date of filing: 20.06.2025
(51) Int. Cl.: F24D 3/14, F16L 3/22, H02G 3/00

(54) **HYDRONIC SYSTEM HAVING TUBE-SUPPORTING BRACKETS**

(30) Priority: 21.06.2024 US 202463662854 P
(71) Applicant: MacDuffco Manufacturing Inc., Victoria, BC V8T 4S6 (CA)
(72) Inventor: MACDUFF, Matthew, VICTORIA, V8T 4S6 (CA)
(74) Representative: Gabriel, Franck

(57) **Abstract**

A hydronic system includes a tube (20) to carry water for heat transfer. The tube (20) either extends in an inter-joist space beneath a floor between a first joist (14) and a second joist (14) or extends in a wall space between a first stud (12) and a second stud (12). The system includes a tubular brace (30) extending either from the first joist (14) to the second joist (14) or from the first stud (12) to the second stud (12). The system includes a pair of surface-mountable tube-supporting brackets mounted to surfaces of the first and second joists (14), or to surfaces of the first and second studs (12). Each of the pair of surface-mountable tube-supporting brackets has a tube-gripping portion to receive and grip the tubular brace (30).

## Description

### TECHNICAL FIELD

The present disclosure relates generally to hydronic heating or cooling systems and more particularly to brackets for supporting tubes and to techniques for installation.

### BACKGROUND

Hydronic heating systems circulate warm water through tubes to heat a dwelling such as a home. One common type of hydronic heating systems are radiant floor heating systems which often have tubing suspended in the inter-joist spaces between adjacent joists of a floor. Fins may be attached to the tubing to enhance heat transfer. Radiant wall heating circulates warm water through tubes disposed between studs of the wall. For radiant floor heating, one technology uses hangers to suspend the tubes and their fins below the floor such as disclosed in U.S. Patent 5,542,603 (MacDuff) and in U.S. 7,913,958 (MacDuff).

Although the systems and methods disclosed in these patents work well, it would be desirable to develop further systems and methods to mount hydronic heating systems in other configurations, particularly for situations where the tubing cannot easily be suspended in the inter-joist spaces beneath the floor. It is also desirable to provide brackets and techniques to simplify installation.

### SUMMARY

In general, the specification discloses a novel hydronic system and method that includes one or more tubular braces extending between joists or studs to which various types of support brackets may be affixed using tube-supporting brackets.

One aspect of the disclosure is a hydronic system including a tube to carry water (or other fluid) for heat transfer, wherein the tube either extends in an inter-joist space beneath a floor between a first joist and a second joist or extends in a wall space between a first stud and a second stud. The hydronic system includes a tubular brace extending either from the first joist to the second joist or from the first stud to the second stud. The hydronic system further includes a pair of surface-mountable tube-supporting brackets mounted to surfaces of the first and second joists, or to surfaces of the first and second studs, wherein each of the pair of surface-mountable tube-supporting brackets has a tube-gripping portion to receive and grip the tubular brace.

The tubular brace may be a segment of tubing identical to the tube used to carry the water.

In one embodiment, the tube-gripping portion defines an average internal diameter D1 and an outer diameter D2 that ranges from 1.4 to 1.8 times D1 being made of a material having a modulus of elasticity ranging from 600 to 1150 MPa.

In one embodiment, the tube is crosslinked polyethylene (PEX) tubing.

The tube-gripping portion may comprise a mouth region that flexes open to receive and grip the tube.

The tube-gripping portion may comprise a teeth, grooves or ridges to grip the tube.

In one embodiment, each of the surface-mountable tube-supporting brackets comprises a body and a C-shaped tube-gripping portion, wherein the body is flat to abut a surface of the stud or joist and wherein the body comprises a first hole in a first direction and a second hole in a second direction that is orthogonal to the first direction.

The hydronic system may further comprise a tube-to-tube bracket comprising a first tube-gripping portion for attaching to the tubular brace and further comprising a second tube-gripping portion oriented orthogonally to the first tube-gripping portion to receive and grip the tube.

The hydronic system may further comprise an inverted J-shaped box-supporting bracket a tube-gripping portion to attach to the tubular brace and a straight portion having a hole for receiving a fastener to fasten a box to the box-supporting bracket.

The hydronic system may further comprise a curved tube-supporting bracket having a first annular collar and a second annular collar aligned with and spaced apart from the first annular collar, thereby defining a gap between the first and second annular collars to receive a tube-to-tube bracket in the gap between the first and second annular collars, a curved guide portion for supporting an underside of the tube, while bending the tube over a predetermined angle, and a lower restraint to restrain the tube, wherein the tube-to-tube bracket has a tube-gripping portion to grip the tubular brace.

A method of installing a hydronic system, the method comprising mounting a pair of surface-mountable tube-supporting brackets to surfaces of the first and second joists, or to surfaces of the first and second studs, wherein each of the pair of surface-mountable tube-supporting brackets each has a tube-gripping portion to receive and grip a tubular brace. attaching the tubular brace to the tube-gripping portion of each of the surface-mountable tube-supporting brackets such that the tubular brace extends between the first and second joists or between the first and second studs; attaching a first tube-gripping portion of a tube-to-tube bracket to the tubular brace; and attaching a tube for carrying water to a second tube-gripping portion of the tube-to-tube bracket.

The method may comprise affixing heat-exchanging fins to the tube by disposing semi-circular troughs of the fins along the tube.

The method may comprise affixing the fins to the tube using twist clips by inserting the twist clips through slots in the fins and rotating the twist clips to secure the fins to the tube.

The method may comprise attaching a tube-gripping portion of an inverted J-shaped box-supporting bracket to the tubular brace and fastening a box to the box-supporting bracket through a hole in a straight portion extending from the tube-gripping portion.

The method may comprise providing a curved tube-supporting bracket having a first annular collar and a second annular collar aligned with and spaced apart from the first annular collar, thereby defining a gap between the first and second annular collars, inserting a tube-to-tube bracket in the gap between the first and second annular collars, attaching a tube-gripping portion of the tube-to-tube bracket to the tubular brace, placing the tube over a curved guide portion for supporting an underside of the tube, while bending the tube over a predetermined angle.

Another aspect of the disclosure relates to a hydronic system has a tube to carry water for heat transfer, the tube either extending in an inter-joist space beneath a floor between a first joist and a second joist or extending in a wall space between a first stud and a second stud. The system includes a tubular brace extending either from the first joist to the second joist or from the first stud to the second stud and a tube-supporting bracket mounted to the tubular brace and supporting the tube. The system may also include a conduit-supporting bracket mounted to the tubular brace.

This summary is not an extensive overview of all contemplated embodiments and is not intended to identify key or critical aspects or features of any embodiments or to delineate any embodiments. Other aspects and features will become apparent to those of ordinary skill in the art upon review of the following description in view of the accompanying figures.

### BRIEF DESCRIPTION OF THE DRAWINGS

Example embodiments will be described in more detail referring to the following figures, in which:
FIG. 1 is a perspective view of a radiant floor heating system as one implementation of a hydronic system in accordance with an embodiment of the present invention, FIG. 1 also showing views of assembled and disassembled braces;
FIG. 2 is a top plan view showing two tubular braces of a portion of a hydronic system in which the braces support a tube having two fins, FIG. 2 also showing side views of assembled and disassembled braces;
FIG. 3 is a perspective view of a radiant wall heating system as another implementation of a hydronic system in accordance with another embodiment of the present invention;
FIG. 4 are perspective and exploded views of a tubular brace and tube-support brackets for supporting tubes in a bent configuration;
FIG. 5 are perspective and exploded views of a tubular brace and two-part support brackets for connecting tubes in an orthogonal configuration; and
FIG. 6 are side views of a tube-supporting bracket and a conduit-supporting bracket.
FIG. 7 are perspective views of two types of tube-supporting brackets and a tubular brace in accordance with another embodiment of the present invention.
FIG. 8 is a perspective view of the tube-supporting brackets supporting the tubular brace between adjoining studs or joists and further supporting a segment of tubing above the tubular brace.
FIG. 9 are perspective views of tube-supporting brackets, a box-supporting bracket and a tubular brace.
FIG. 10 is a perspective of the tube-supporting brackets supporting the tubular brace between adjoining studs or joists and further supporting a box.
FIG. 11 are perspective views of tube-supporting brackets and a tubular brace.
FIG. 12 is a perspective view of the tube-supporting brackets supporting the tubular brace between adjoining studs or joists and further supporting a curved or bent segment of tubing.
FIG. 13 is a perspective view of a hydronic system having tube-supporting and box-supporting brackets in accordance with an embodiment of the invention.
FIG. 14 is a perspective view showing a first step of a method of installing a hydronic system between joists in accordance with one embodiment of the invention.
FIG. 15 is a perspective view showing a second step of the method of installing the hydronic system between joists.
FIG. 16 is a perspective view showing a third step of the method of installing the hydronic system between joists.
FIG. 17 is a perspective view showing a fourth step of the method of installing the hydronic system between joists.
FIG. 18 is a perspective view showing a fifth step of the method of installing the hydronic system between joists.
FIG. 19 is a perspective view showing a first step of another method of installing the hydronic system to a subfloor sheathing or other horizontal structure under a floor.
FIG. 20 is a perspective view showing a second step of the method of installing the hydronic system to a subfloor sheathing or other horizontal structure under a floor.
FIG. 21 is a perspective view showing a third step of the method of installing the hydronic system to a subfloor sheathing or other horizontal structure under a floor.
FIG. 22 is a perspective view showing a fourth of step the method of installing the hydronic system to a subfloor sheathing or other horizontal structure under a floor.
FIG. 23 is a schematic view of a hydronic system.

It will be noted that throughout the appended figures, like features are identified by like reference numerals.

### DETAILED DESCRIPTION

Disclosed herein are embodiments relating to a hydronic system, such as a radiant floor heating system or a radiant wall heating system. The hydronic system has a tubular brace that extends between adjacent studs of a wall or adjacent joists of a floor. In various embodiments, a support bracket is mounted to the tubular brace. Different types of support brackets may be mounted to the tubular brace. For example, the support bracket may be a tube-supporting bracket for supporting a tube that carries water for heat transfer in the hydronic system. As another example, the support bracket may be a conduit-supporting bracket for supporting an electric wire conduit.

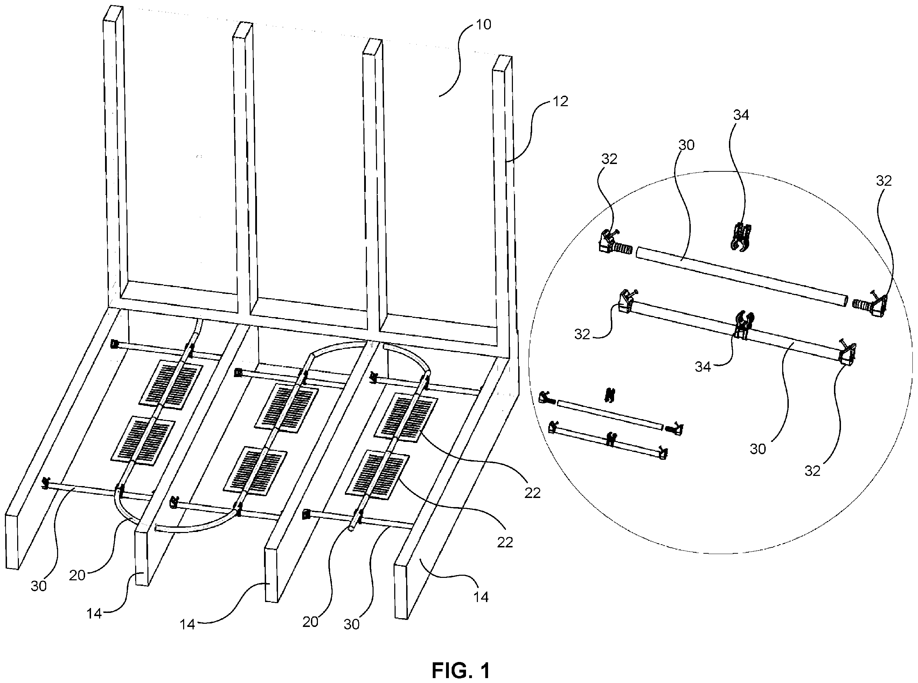

In the embodiment depicted by way of example in FIG. 1, a hydronic system is shown installed. Not shown in the figures is a water heater (or boiler), heat exchanger and control system, which are components well known in the art. In the example of FIG. 1, the hydronic system is shown installed in a dwelling, e.g. a house, building, office, etc., that has a wall 10, studs 12, a floor (not shown) and joists 14. As shown in FIG. 1, the hydronic system includes a tube 20 to carry water for heat transfer. In one specific implementation, the tube is crosslinked polyethylene (PEX) tubing. It will be appreciated that any other functionally equivalent material may be used for the tube. As shown in FIG. 1, the tube 20 extends in an inter-joist space beneath a floor between a first joist and a second joist. Alternatively, if used in a radiant wall heating system, the tube extends in a wall space between a first stud and a second stud. The hydronic system includes a tubular brace 30 extending from the first joist to the second joist as shown in FIG. 1. In the alternative implementation of a radiant wall heating system, the tubular brace 30 extends between the first stud and the second stud. In one embodiment, the tubular brace 30 is a segment of tubing identical to the tube used to carry the water, e.g. the tube and tubular brace may both be made of crosslinked polyethylene (PEX) tubing. The tubular brace 30 includes anchors 32 for mounting the tubular brace to the joists 14. As shown in FIG. 1, heat-radiating fins 22 may be affixed to the tube 20 to promote heat transfer. The hydronic system includes, as shown in FIG. 1, a tube-supporting bracket 34 mounted to the tubular brace 30 for supporting the tube 20.

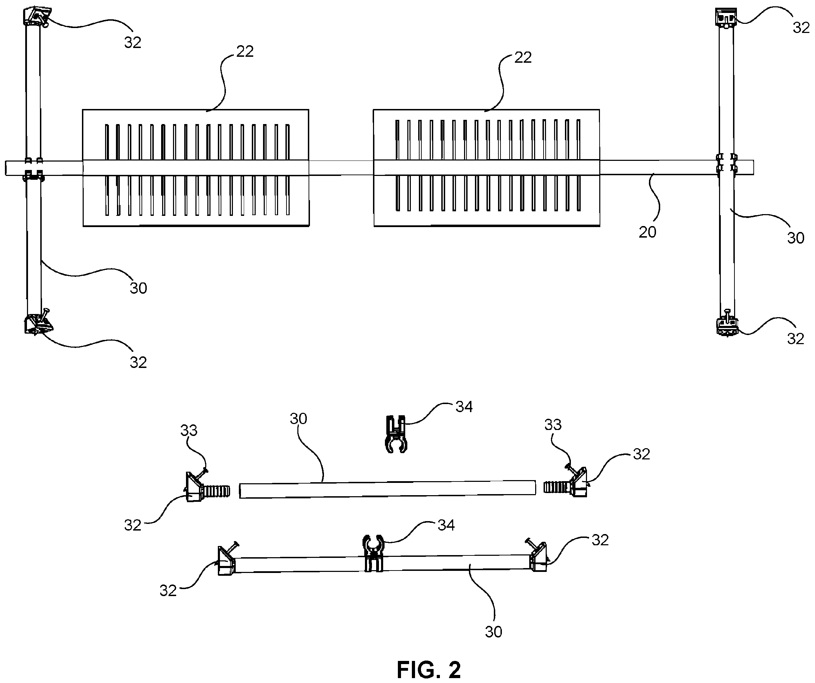

As depicted by way of example in FIG. 2, the tubular brace 30 comprises anchors 32 for anchoring the tubular brace to the joists or studs. Each of the anchors 32 comprises a cylindrical element 31 to mate with an end of the tube 30 and a body portion having a bore through which a fastener 33 is inserted to fasten the anchor to a respective joist or stud.

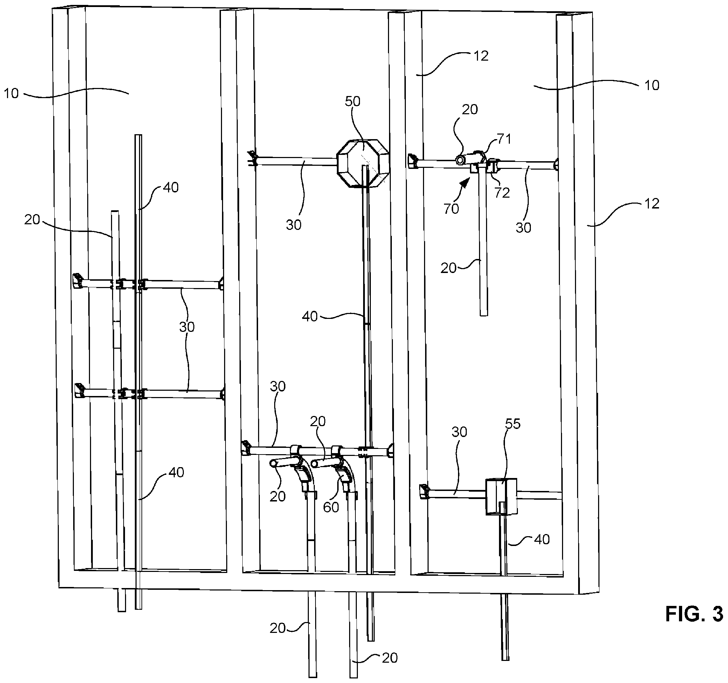

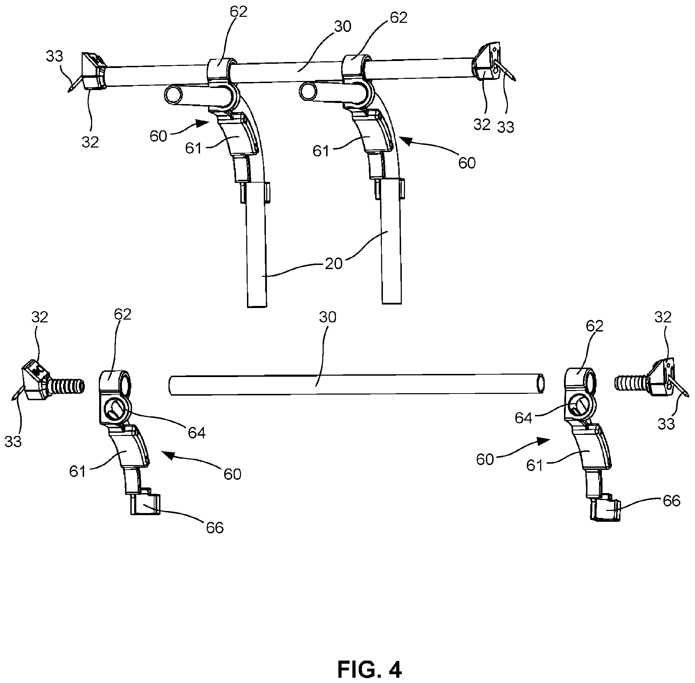

As depicted by way of example in FIG. 3, the hydronic system (in this instance, a radiant wall heating system) includes multiple tubular braces 30 between adjacent pairs of studs. FIG. 3 shows tubes 20 for carrying water as well as electric wire conduits 40 housing electric wires for electrically connecting to one or more electrical boxes, e.g. octagonal box 50 and rectangular box 55. As shown in FIG. 3 and in more detail in FIG. 4, a first type of tube-supporting bracket 60 has a curved body 61, a collar 62 at a first end of the body that slides over the tubular brace, a concave clip-like portion 66 at a second end of the body to grasp the tube and an annular guide 64 through which the tube 20 extends to thereby bend the tube from a first orientation to a second orientation. For example, as shown, the first orientation may be orthogonal to the second orientation. It will be appreciated that the first and second orientations may be different from what is shown.

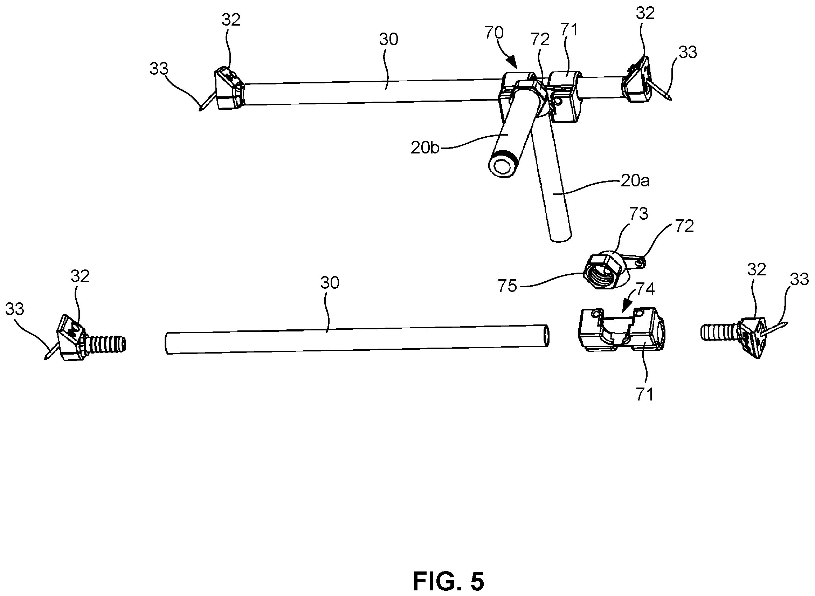

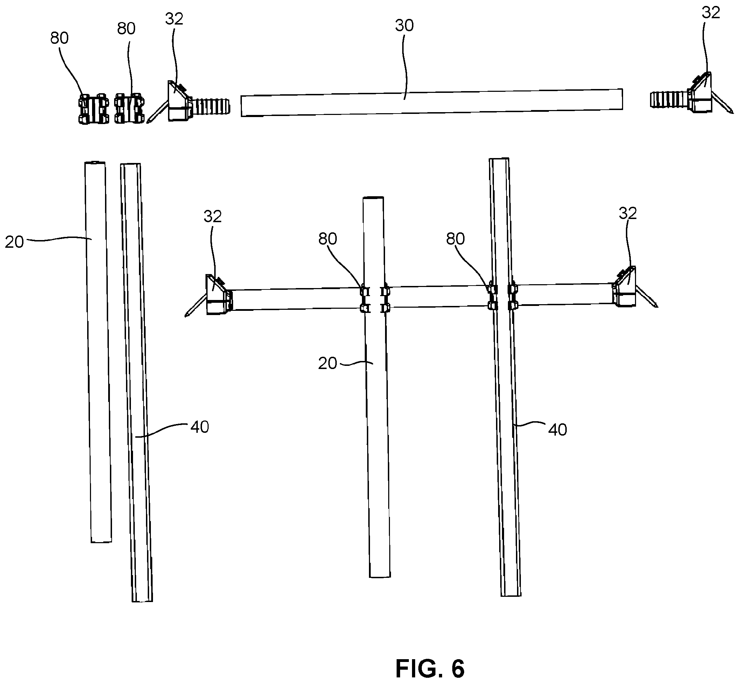

As shown in FIG. 3 and in greater detail in FIG. 5, a second type of tube-supporting bracket 70 includes a first component 71 and a second component 72. The first component has a collar that slides over the tubular brace. The first component 71 also has a tube-receiving aperture to receive a first tube segment 20a, e.g. a vertical segment of tube. The second component has an elbow 73 configured to fit into a receptable 74 of the first component. The elbow 72 has a tube-receiving bore 75 to receive a second tube segment 20b, e.g. a horizontal segment of tube. As depicted in FIG. 3 and in greater detail in FIG. 6, another type of tube-supporting bracket 80 has a concave clip-like element having gripping fingers to grip the tube. For example, there may be four gripping fingers, prongs, tines or the like. Instead of a clip-type connector, the bracket 80 can have another form of connection, e.g. a hose clamp, or any other type of fastening or connecting means. The hydronic system may also comprise a conduit-supporting bracket (also denoted by reference 80) mounted to the tubular brace. The conduit-supporting bracket has a concave clip-like element having gripping fingers to grip a conduit 40 for supporting an electric wire conduit. The electric wire conduit may lead wires to an electrical box as shown by way of example in FIG. 3. The system may thus also include a box-supporting bracket mounted to the tubular brace for supporting an electrical box in the wall space between the first and second studs. In one example, the electrical box is an octagonal box 50. In another example, the electrical box is a rectangular box 55.

Another aspect of the invention is a method of installing a hydronic system. The method comprises steps, acts or operations of: attaching a tubular brace between either a first joist and a second joist in a inter-joist space beneath or attaching the tubular brace between a first stud and a second stud in a wall space; connecting a tube-supporting bracket to the tubular brace; and mounting a tube for carrying water for heat transfer to the tube-supporting bracket. In one embodiment, the method is performed using a tubular brace that is a segment of tubing identical to the tube used to carry the water. In one embodiment of the method, the tube is crosslinked polyethylene (PEX) tubing.

In one embodiment, the entails anchoring the tubular brace to the joists or studs using anchors. The anchoring comprises mating a cylindrical element of each anchor with an end of the tube and inserting a fastener through a bore in a body portion of the anchor to fasten the anchor to a respective joist or stud.

In one embodiment of the method, the tube-supporting bracket has a curved body, a collar at a first end of the body that slides over the tubular brace, a concave clip-like portion at a second end of the body to grasp the tube and an annular guide. The method comprises extending the tube through the annular guide to thereby bend the tube from a first orientation to a second orientation and clipping the tube to the clip-like portion.

In one embodiment of the method, the tube-supporting bracket includes a first component and a second component. The first component has a collar that slides over the tubular brace and has a tube-receiving aperture to receive a first tube segment. The second component has an elbow configured to fit into a receptable of the first component. The elbow has a tube-receiving bore to receive a second tube segment. The method comprises affixing the first tube segment to the tube-receiving aperture and affixing the second tube segment to the tube-receiving bore.

In one embodiment of the method, the tube-supporting bracket has a concave clip-like element having gripping fingers. The method comprises clipping the tube to the tube-supporting bracket.

In one embodiment of the method, a conduit-supporting bracket is mounted to the tubular brace, the conduit-supporting bracket having a concave clip-like element having gripping fingers to grip a conduit support. The method comprises clipping an electric wire conduit to the concave clip-like element.

In one embodiment, the method further comprises mounting a box-supporting bracket to the tubular brace and connecting an electrical box to the box-supporting bracket in the wall space between the first and second studs.

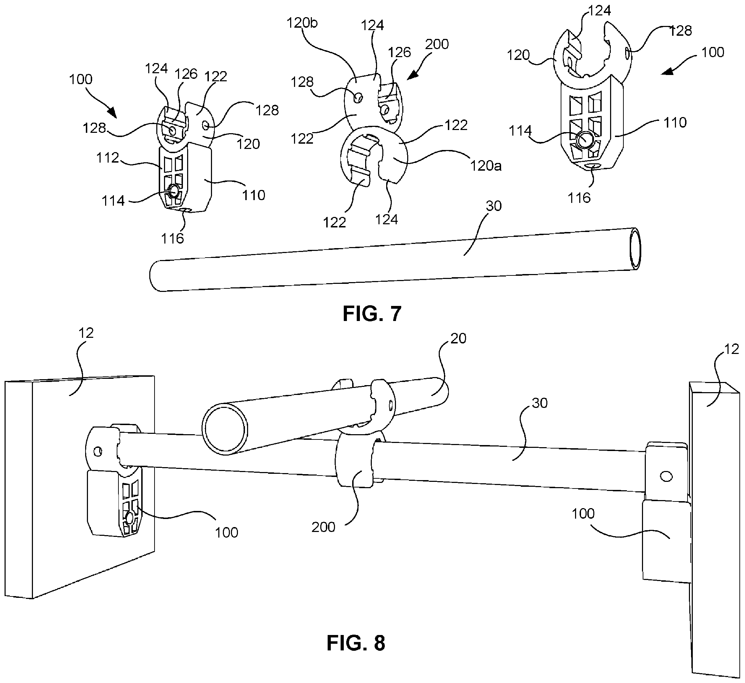

FIGS. 7 to 22 depicts other embodiments of the present invention. Various types of tube-supporting brackets, also referred to as tube clips, facilitate installation of tubing. This is particularly useful for installing hydronic systems such as radiant floor heating.

FIG. 7 depicts perspective views of two types of tube-supporting brackets 100, 200 in accordance with other embodiments of the invention. The tube-supporting brackets 100, 200 of FIG. 7 are meant to receive and secure a tubular brace 30 and to support a tube, pipe or conduit of a hydronic system. The tubular brace 30 may have a length equal to, or substantially equal to, a gap between studs or joists. As depicted by way of example in FIG. 7, a surface-mountable tube-supporting bracket 100 is configured to attach, secure or mount the tubular brace 30 to a flat and rigid surface of a dwelling or building such as a surface of a stud or joist. As further depicted by way of example in FIG. 7, the surface-mountable tube-supporting bracket 100 includes a body portion (or body) 110 and a tube-gripping portion 120 that grips the tubular brace 30. The body 110 may have a flat surface or open-mesh structure 112 defining a plane to abut the stud or joist. The body 110 may have two parallel flat surfaces (two planar surfaces) as shown. The body 110 includes a first hole 114 in a first direction. The body 110 may optionally also have a second hole 116 in a second direction that is orthogonal to the first direction. The first hole 114 may be normal to the flat (planar) surface. The first hole 114 may be a round bore to receive a fastener, e.g. screw, that may be inserted though the first hole to fasten the body to the stud or joist. The second hole 116 may be a round bore to receive a fastener, e.g. screw, that may be inserted though the second hole to fasten the body to a subfloor sheathing or other horizontal structure. Since the first and second holes are on intersecting axes, only one of the two holes is used depending on the desired orientation of the bracket 100. The tube-gripping portion 120 may be curved, concave, C-shaped or U-shaped as illustrated by way of example. As shown by way of example in FIG. 7, the tube-gripping portion 120 has a generally semicircular or C-shaped portion 122 and a mouth portion 124 having two curved fingers (or curved arms) or curved finger-like (or curved arm-like) extensions. The C-shaped portion 122 may have teeth, grooves or ridges 126. The tube-gripping portion 120 in one embodiment is made of an elastic material, e.g. crosslinked polyethylene (PEX) which deforms (i.e. flexes open) to forcibly receive the tubular brace and then grasps the tubular brace in the tube-gripping portion as the elastic material seeks to return to its original undeformed position. The depth (thickness) of the tube-gripping portion is the same as the body in the illustrated embodiment so that the entire surface-mountable tube-supporting bracket 100 fits flush against the surface of the stud or joist. Optionally, the tube-gripping portion includes apertures 128 in the C-shaped or semicircular portion 122 to receive optional fasteners, e.g. set screws, to secure the tubular brace 30 to the surface-mountable tube-supporting bracket 100. The width of the tube-gripping portion is greater than the width of the body. The overall height of the tube-gripping portion and the body (i.e. overall height of the bracket 100) is greater than the width of the tube-gripping portion. FIG. 7 also depicts a tube-to-tube bracket 200 that clips onto the tubular brace 30 and then supports a hydronic (fluid-carrying) tube, pipe or conduit. The tube-to-tube bracket 200, as shown in FIG. 7, has a first tube-gripping portion 120a (first tube-clipping portion) and a second tube-gripping portion 120b (second tube-clipping portion) that is oriented orthogonally to the first tube-gripping portion 120a. The first and second tube-gripping portions 120a, 120b are similar to the tube-gripping portion 120 described above. The first and second tube-gripping portions 120a, 120b each have a semicircular or C-shaped portion 122, a mouth portion 124, teeth, grooves or ridges 126, and apertures 128. The first and second tube-gripping portions 120a, 120b (in one embodiment) are each made of an elastic material, e.g. crosslinked polyethylene (PEX). The first tube-gripping portion 120a deforms (i.e. flexes open) to forcibly receive the tubular brace in the first tube-gripping portion 120a and then grasps the tubular brace in the first tube-gripping portion 120a as the elastic material seeks to return to its original undeformed position. Similarly, the second tube-gripping portion 120b deforms (i.e. flexes open) to forcibly receive the hydronic tubing in the second tube-gripping portion 120b and then grasps the hydronic tubing in the second tube-gripping portion 120b as the elastic material seeks to return to its original undeformed position. The tube-to-tube bracket 200 thus orients the hydronic tubing at ninety degrees to the tubular brace.

FIG. 8 is a perspective view of the tube-supporting brackets 100, 200 supporting the tubular brace 30 between adjoining studs 12 (or between adjoining joists) and further supporting a segment of tubing 20 above the tubular brace 30. More specifically, as shown in FIG. 8, a pair of surface-mountable tube-supporting brackets 100 are fastened to the studs 12 (or joists) to support a tubular brace between the studs or joists. A tube-to-tube bracket 200 clips onto the tubular brace 30, i.e. attaches to the tubular brace 30. The tube-to-tube bracket 200 supports the hydronic tubing 20 above the tubular brace 30 as shown in FIG. 8. The tube-to-tube bracket 200 thus orients the hydronic tubing 20 at ninety degrees to the tubular brace 30 as illustrated in FIG. 8. The hydronic tubing 20 is thus oriented to be parallel to the studs 12 or joists. As depicted by way of example in FIG. 8, when the tubing is gripped by the tube-to-tube bracket 200, the mouth is flared open relative to its undeformed position. In other words, the opening of the mouth when gripping the tubing is wider than the opening of the mouth without the tubing.

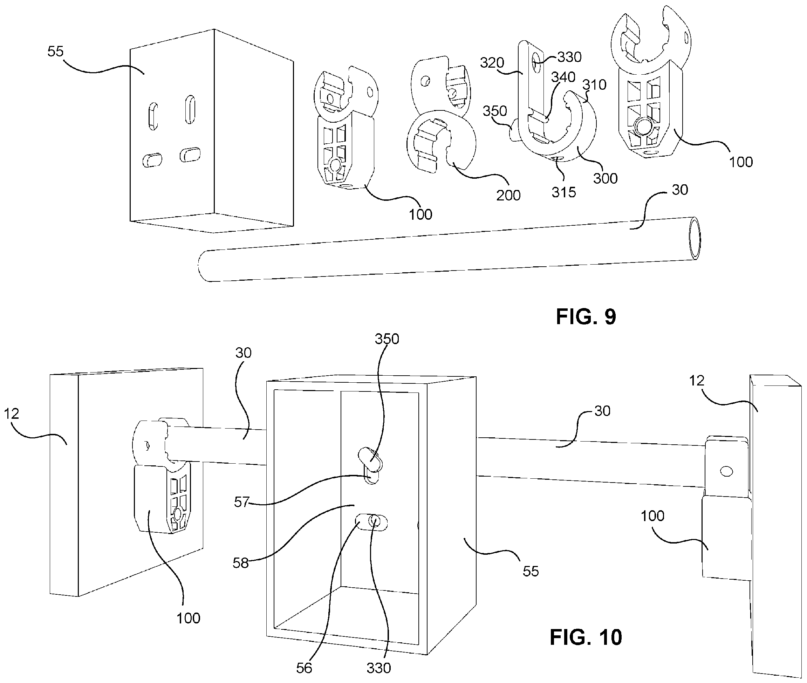

FIG. 9 depicts perspective views of two surface-mountable tube-supporting brackets 100, a tubular brace 30, a tube-to-tube bracket 200 and a box-supporting bracket 300. The box-supporting bracket 300 may be used to support a box 55, such as for example, an electrical junction box. The box may be a rectangular box or a box of another shape. As depicted by way of example in FIG. 9, the box-supporting bracket 300 may have an inverted J-shaped body. The box-supporting bracket 300 may have a tube-gripping portion 310 that has a curved or semicircular head that is configured to fit over the tubular brace 30 to attach to the tubular brace. The box-supporting bracket 300 may also have a straight hanger portion 320 or tail that extends from the tube-gripping portion 310. The tube-gripping portion 310 may have a hole 315 for a fastener, e.g. a set screw, to secure the tube-gripping portion 310 to the tubular brace. The straight hanger portion 320 may also have a hole through which a fastener may be inserted to fasten the box-supporting bracket 300 to the box 55. The tube-gripping portion 310 may include teeth, grooves or ridges to better grip the tubular brace. The straight hanger portion 320 may also have a protrusion 350 or hook spaced above the hole 330. The protrusion or hook 350 is configured to fit through a hole in the box to secure the box from unwanted rotation.

FIG. 10 is a perspective of two surface-mountable tube-supporting brackets 100 supporting the tubular brace 30 between adjoining studs 12 or joists. As shown in FIG. 10 is a box 55 supported by the box-supporting bracket. As shown by way of example in FIG. 10, the box 55 has a lower hole 56 and an upper hole 57 in the back wall 58 of the box 55. The protrusion 350 or hook fits through the upper hole 57 while the hole 330 aligns with the lower hole 56 to receive a fastener to secure the box-supporting bracket to the box. As shown by way of example in FIG. 10, the protrusion 350 or hook may have an oblong cross-sectional profile that slides through a correspondingly shaped oblong upper hole 57. As shown by way of example in FIG. 10, the protrusion 350 may be inserted at an oblique angle and then rotated, turned or twisted to lock the protrusion 350 relative to the upper hole 57. When the fastener is then inserted into the lower hole 56 and the hole 330, the box is then fully secured to the box-supporting bracket. Once fastened in this manner with the protrusion rotated inside the upper hole, the box can neither slide nor rotate relative to the box-supporting bracket.

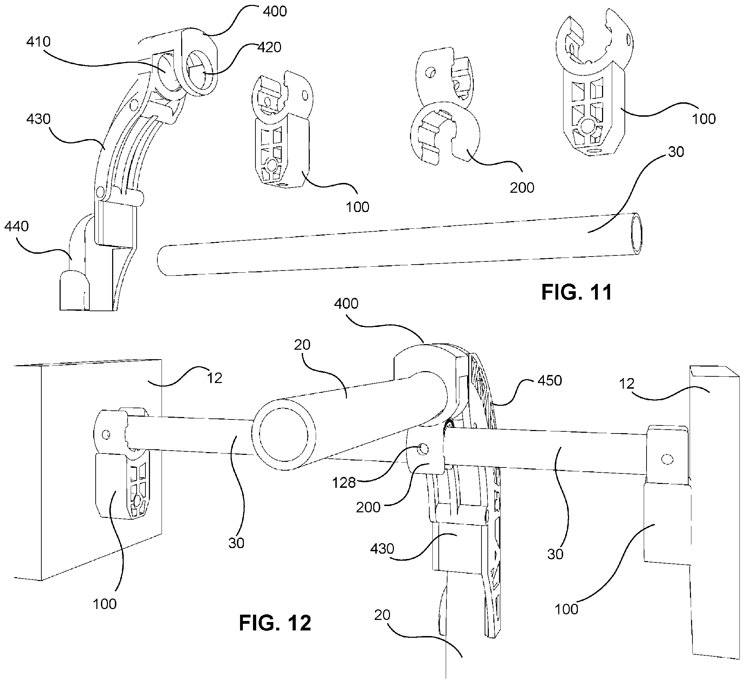

FIG. 11 depicts perspective views of two surface-mountable tube-supporting brackets 100, a tubular brace 30, a tube-to-tube bracket and a curved tube-supporting bracket 400. The curved tube-supporting bracket 400 as shown by way of example in FIG. 11 includes a first annular collar 410 and a second annular collar 420 aligned with and spaced apart from the first annular collar 410, thereby defining a gap between the first and second annular collars. The tube-to-tube bracket fits in this gap between the first and second annular collars. In other words, the upper tube-gripping portion of the tube-to-tube bracket is fitted into the gap between the first and second annular collars. The curved tube-supporting bracket 400 further includes, as depicted in the embodiment of FIG. 11, a curved guide portion 430, e.g. for supporting an underside of the hydronic tubing, while bending the hydronic tubing over a predetermined angle, e.g. 90 degrees. The curved tube-supporting bracket 400 further includes, as depicted in the embodiment of FIG. 11, a lower collar or restraint 440, e.g. for holding the hydronic tubing in a first orientation before it bends over the predetermined angle over the curved guide portion.

FIG. 12 is a perspective view of two surface-mountable tube-supporting brackets 100 supporting the tubular brace 30 between adjoining studs 12 or joists and further supporting a curved or bent segment of tubing using the curved tube-supporting bracket 400. In this example, the lower part of the hydronic tubing 20 is vertical whereas the upper part of the hydronic tubing 20 is horizontal. The curved tube-supporting bracket 400 thus bends the tubing 90 degrees. The tube-to-tube bracket 200 may be secured to the tubular brace by inserting a fastener, e.g. set screw, through hole 128. Optionally, as depicted by way of example in FIG. 12, the curved tube-supporting bracket 400 may have tube-restraining side walls or side covers 450 to restrain the tubing. Optionally, the curved tube-supporting bracket 400 may have side and rear cover structure to enclose the tubing and/or to assist in the bending of the tubing.

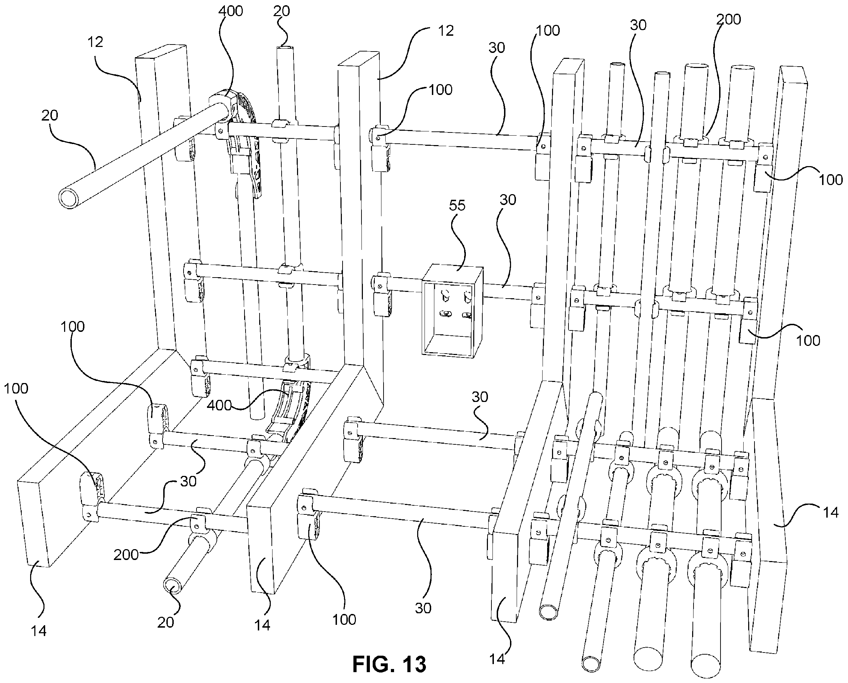

FIG. 13 is a perspective view of a hydronic system having various tube-supporting brackets as well as a box-supporting bracket in accordance with an embodiment of the invention. The hydronic system, in this example, has a plurality of tubular braces 30 (cross braces) extending between adjacent studs 12 and between adjacent joists 14. A plurality of surface-mountable tube-supporting brackets 100 support the tubular braces 30. Various tube-to-tube brackets 200 support the various respective segments of hydronic tubing 20. Two curved tube-supporting brackets 400 cause respective segments of the hydronic tubing 20 to bend over 90 degrees as shown in FIG. 13. An electrical junction box 55 is supported between two adjacent studs 12 by a box-supporting bracket attached to one of the tubular braces 30. Note that the box-supporting bracket is not visible in FIG. 13 as it is behind the box 55. The tube-to-tube brackets 200 may be made with different dimensions to grip tubes, pipes or conduits of different diameters. The tube-to-tube brackets 200 may therefore also be dimensioned to grip electrical conduits. For example, the hydronic tubing may be PEX tubing or pipe having metric (SI) diameters ranging from 10 to 30 mm, e.g. 10mm, 15mm, 22mm or 28mm. Alternatively, the PEX tubing commonly used in the US may be ½ inch, ⅝ inch, ¾ inch or 1 inch in diameter with respective wall thicknesses of 0.070 inch, 0.083 inch, 0.097 inch or 0.125 inch. Any other suitable diameter of tubing may be used. The modulus of elasticity of the PEX tubing may range from 600 to 1150 MPa. Another material may be substituted if it has functionally equivalent properties. For example, a functionally equivalent material in pipe form could have similar dimensions as described above and have a modulus of elasticity ranging from 600 to 1150 MPa. For example, the surface-mountable tube-supporting bracket 100 have a gripping portion defining an average internal diameter (accounting for the teeth, grooves and/or ridges) D1 and an outer diameter D2 that ranges from 1.4 to 1.8 times D1, preferably 1.5 to 1.7 times D1, and more preferably 1.6 times D1 while being made of a material having a modulus of elasticity ranging from 600 to 1150 MPa. This provides a suitable flexure to flex open (flare open) the mouth of the gripping portion to receive the tubing. In another implementation, the radial girth of each semicircular arm of the gripping portion may be 16%-20% of D1, preferably 17-19% of D1, and more preferably 18% of D1 while being made of a material having a modulus of elasticity ranging from 600 to 1150 MPa. Again, this provides a suitable flexure to flare open the mouth of the gripping portion to receive the tubing.

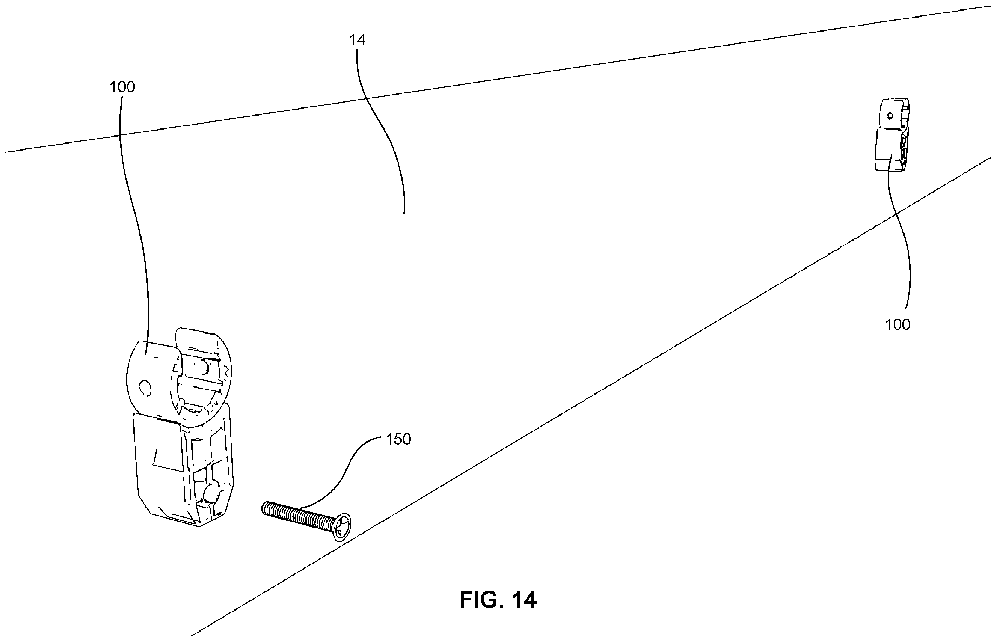

FIG. 14 is a perspective view showing a first step of a method of installing a hydronic system between joists 14 in accordance with one embodiment of the invention. In the example of FIG. 14, the first step of the method entails attaching the surface-mountable tube-supporting brackets 100 to the opposite sides of the joists 14. This may be accomplished by fastening a threaded fastener 150, e.g. a screw. The surface-mountable tube-supporting brackets 100 should be fastened so that each pair of brackets 100 align with each other to enable the brace to be installed orthogonal to the joists.

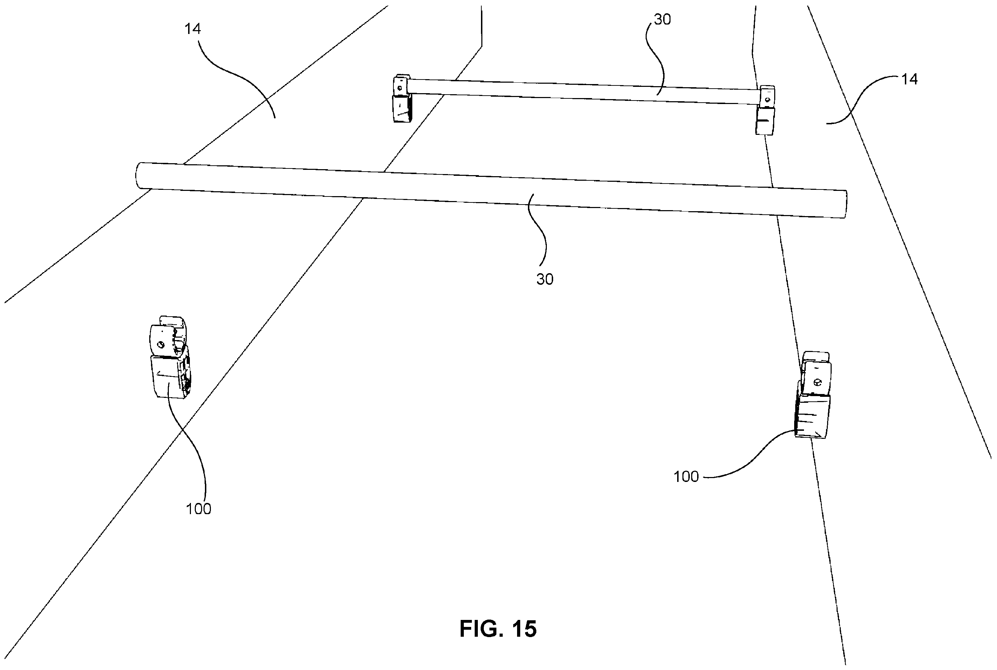

FIG. 15 is a perspective view showing a second step of the method of installing the hydronic system between the joists 14. In the second step, the tubular braces 30 are secured to each pair of surface-mountable tube-supporting brackets 100.

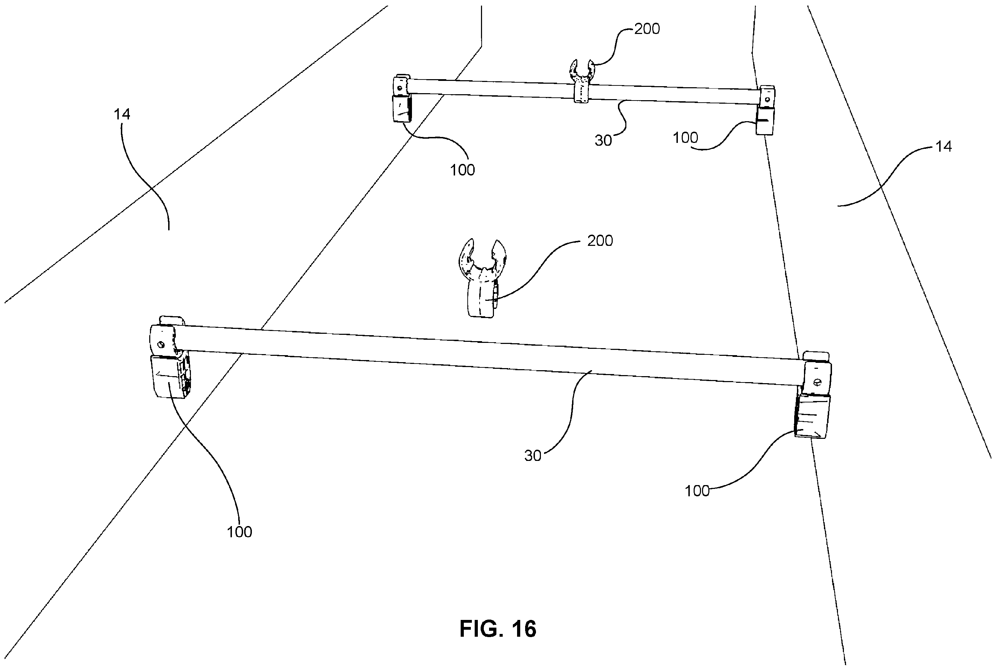

FIG. 16 is a perspective view showing a third step of the method of installing the hydronic system between the joists 14. In this third step, the tube-to-tube brackets 200 are clipped onto the tubular braces 30. The tube-to-tube brackets 200 may be clipped onto the tubular braces 30 at a midway point along each of the tubular braces.

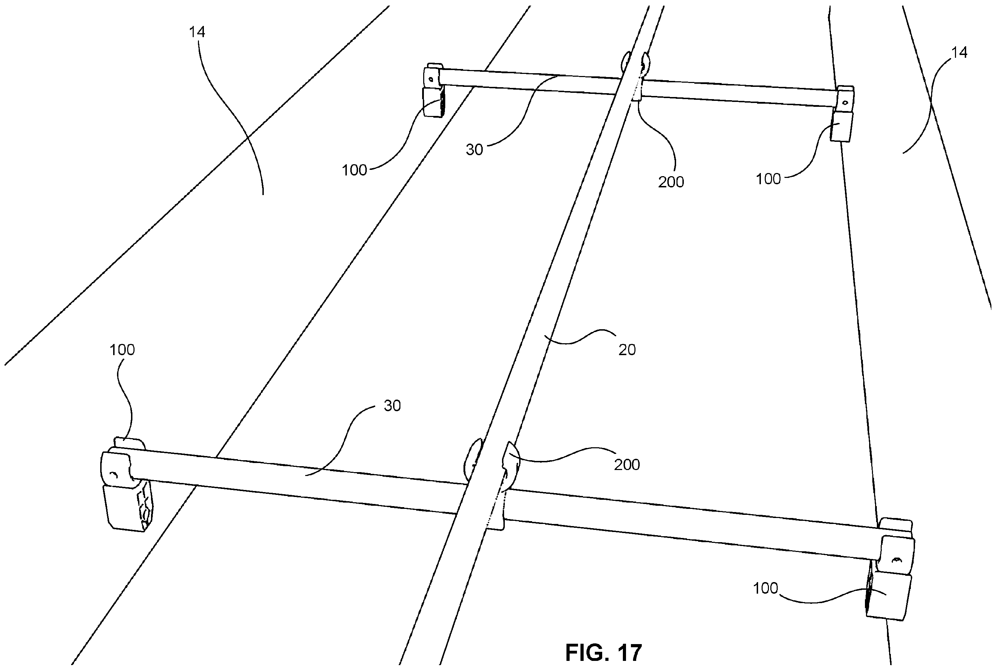

FIG. 17 is a perspective view showing a fourth step of the method of installing the hydronic system between the joists 14. The hydronic tubing 20 can then be clipped onto (i.e. attached to) the tube-to-tube brackets 200. As shown in this example, the hydronic tubing is orthogonal to the tubular braces 30 and parallel to the joists 14. In this example, the hydronic tubing 20 runs along the middle of the gap between the joists.

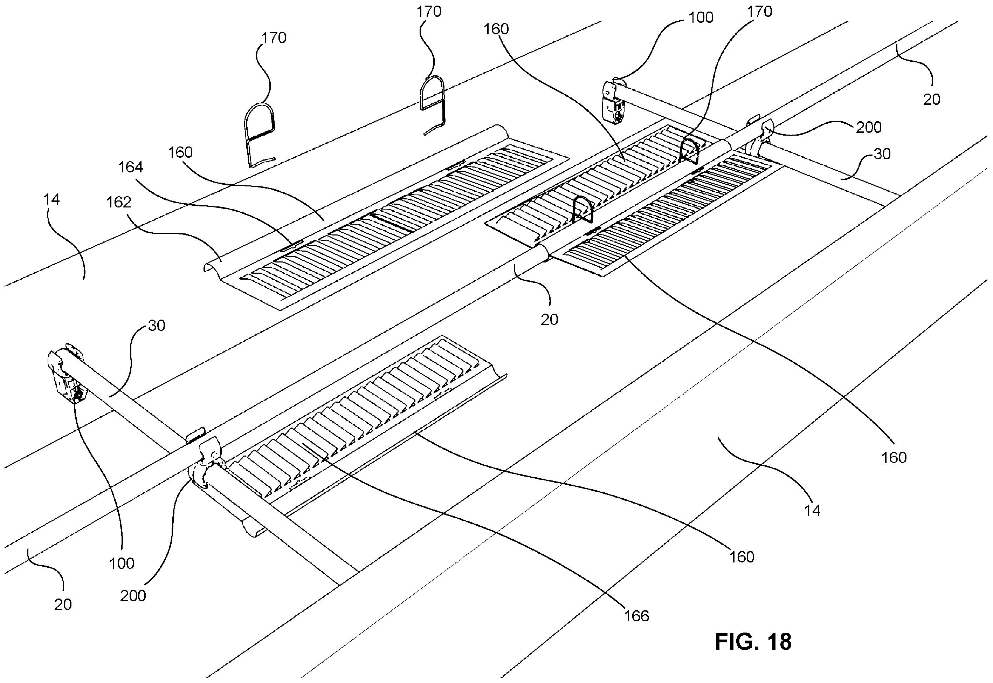

FIG. 18 is a perspective view showing a fifth step of the method of installing the hydronic system between the joists 14. In this fifth step, heat-exchanging fins 160 are attached to the hydronic tubing 20 to enhance heat transfer. The fins 160 may be attached to the hydronic tubing 20 by e-shaped wire clip or twist clips 170. The fins have a semicircular trough 162 having a diameter substantially equal to (or slightly larger than) the diameter of the tubing 20 so that the trough fits either on top of the tubing 20 or fits on the bottom of the tubing. The twist clips 170 are inserted through a horizontal slot 164 in the fin 160 and then rotated (twisted) to affix the fin 160 to the tubing 20. The fin 160 may be a louvered fin as shown. That is, the fin 160 may have a plurality of louvers 166.

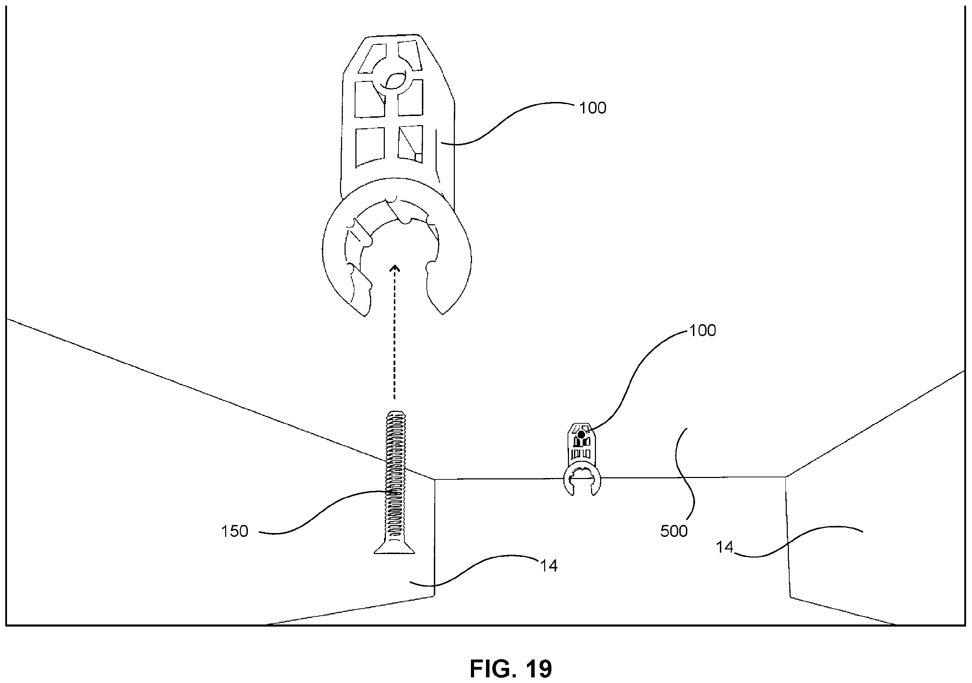

FIG. 19 is a perspective view showing a first step of another method of installing the hydronic system to a subfloor sheathing 500 or other horizontal structure under a floor. The subfloor sheathing 500 is supported by joists 14. The fastener 500 is inserted vertically (i.e. upwardly) through the surface-mountable tube-supporting bracket 100 to secure the surface-mountable tube-supporting bracket 100 to the underside of the subfloor sheathing. The brackets 100 should be aligned and spaced equally apart from the joists.

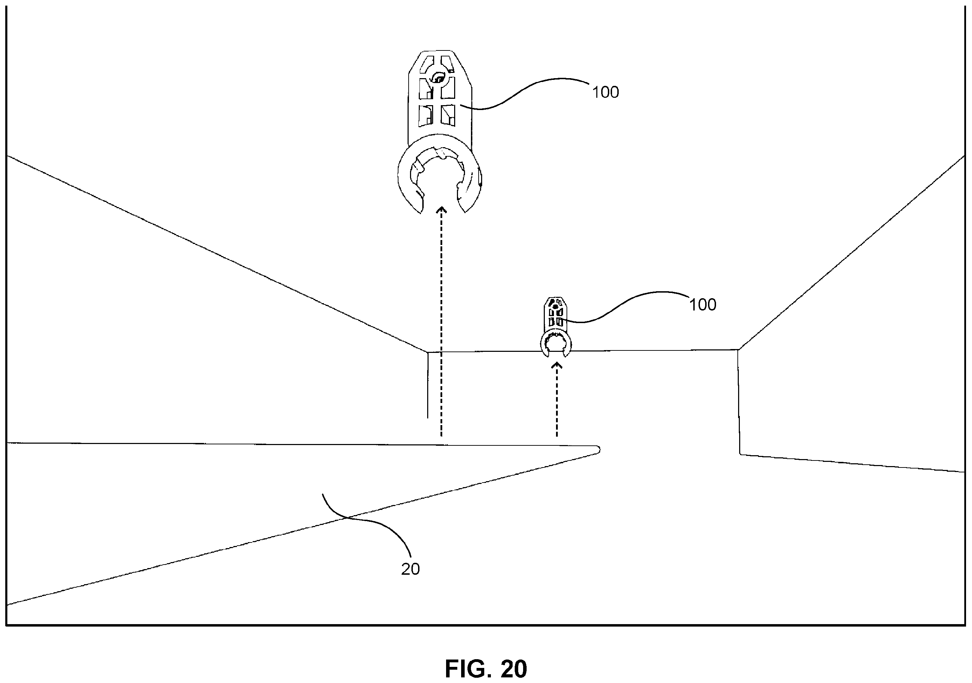

FIG. 20 is a perspective view showing a second step of the method of installing the hydronic system to a subfloor sheathing or other horizontal structure under a floor. In this second step, the tubing 20 is attached to the tube-gripping portions of the surface-mountable tube-supporting brackets 100. This may be accomplished by pressing the tubing 20 upwardly against the tube-gripping portions to cause the mouths of the tube-gripping portions to flare open and to receive the tubing. The tube-gripping portions then grip the tubing as the mouths of the tube-gripping portions attempt to return elastically to their undeformed positions.

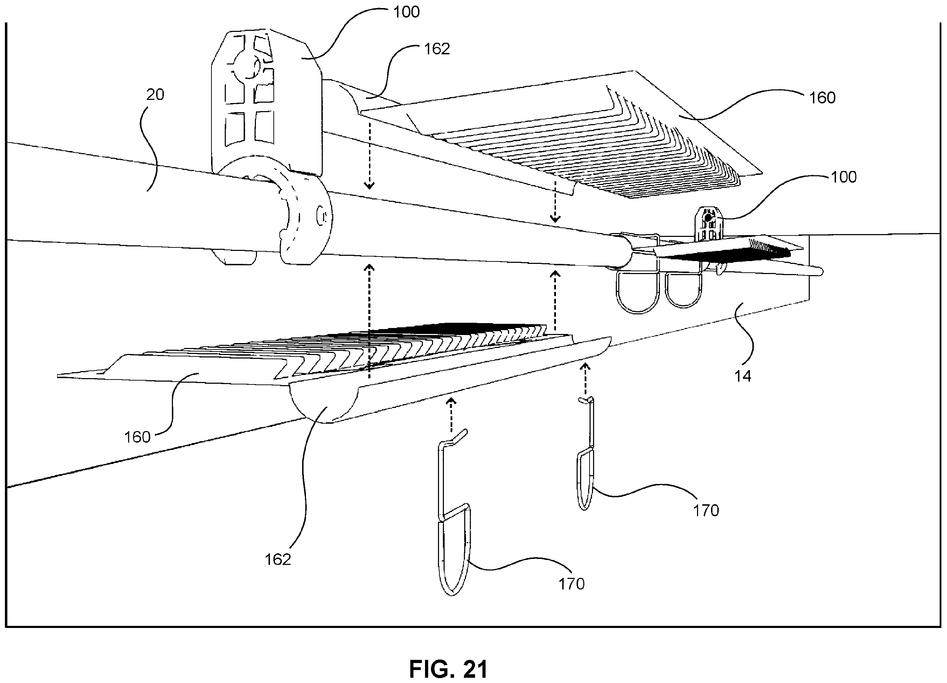

FIG. 21 is a perspective view showing a third step of the method of installing the hydronic system to a subfloor sheathing or other horizontal structure under a floor. In this third step, the heat-exchanging fins 160 are attached to the tubing 20 by twist clips 170. The semicircular troughs 162 of the fins 160 are placed on the tubing 20 (one from the top and the other from the bottom, as illustrated by way of example in FIG. 21).

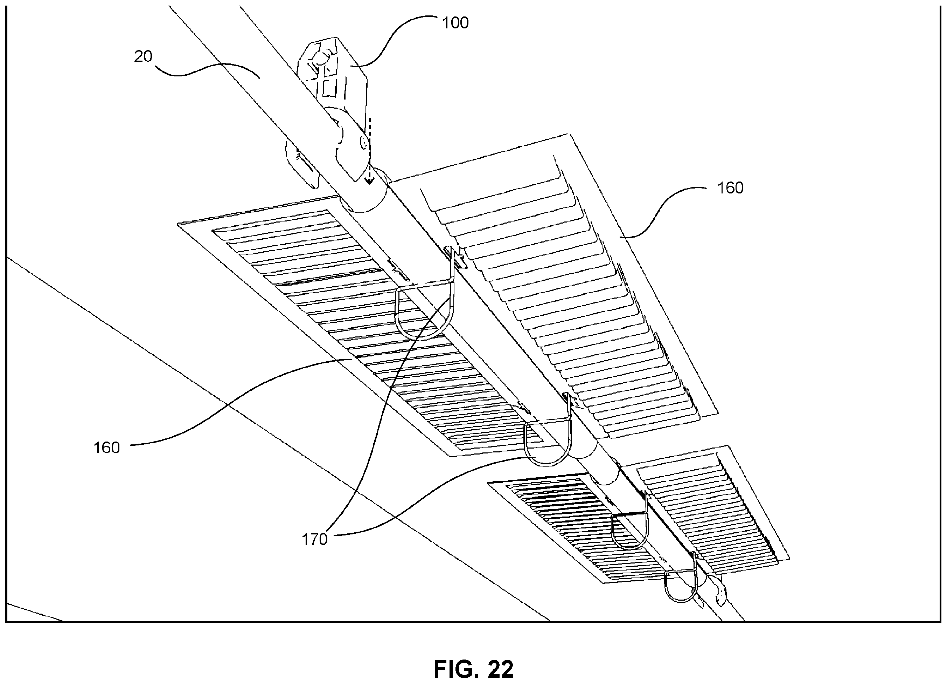

FIG. 22 is a perspective view showing a fourth (and final) step of the method of installing the hydronic system to a subfloor sheathing or other horizontal structure under a floor. In this fourth and final step, the twist clips 170 are all inserted and rotated to affix the fins 160 to the tubing 20. The hydronic system is now ready to operate. The hydronic system may be a radiant floor heating system.

In one embodiment, the brackets 100, 200, 300, 400 are made of crosslinked polyethylene (PEX), i.e. the same material as the tubing 20. Similarly, the tubular brace 30 can be made of PEX. The brackets may be made from recycled or repurposed PEX tubing that has been cut for various plumbing jobs. Thus, this particular embodiment is very environmentally friendly as it recycles scrap materials that would otherwise be thrown away as garbage or waste material.

The various embodiments described herein may be used in a hydronic system such as a radiant floor heating system or a radiant wall heating system. Alternatively, the hydronic system may be a cooling system or a system capable of alternately heating and cooling. The hydronic system may use water as the fluid medium; however another heat-transfer fluid may be used in other variants.

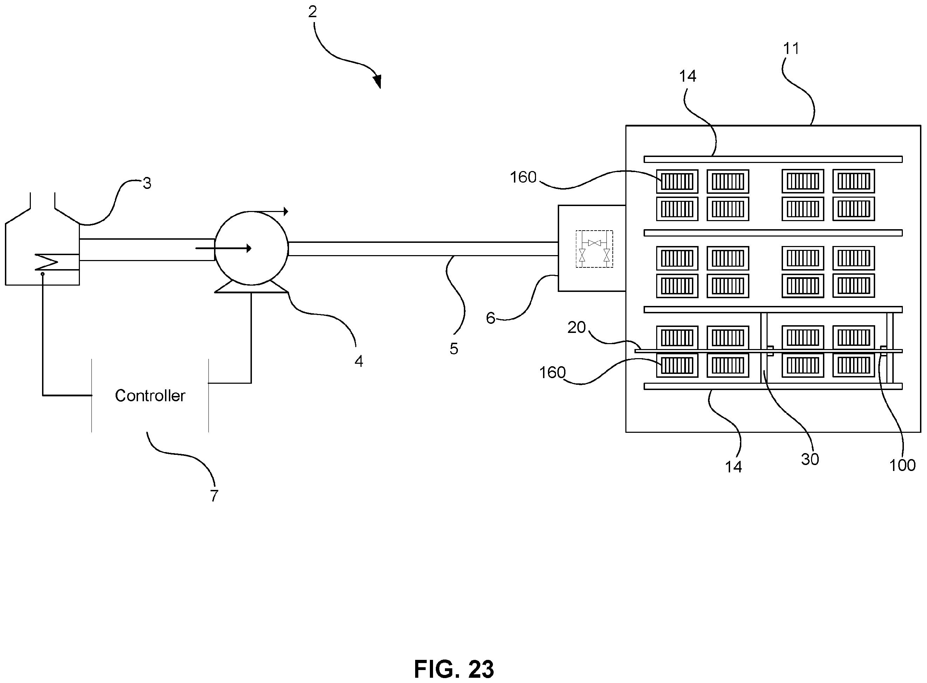

As depicted by way of example in FIG. 23, the hydronic system 2 is installed below a floor 11 and between joists 14. As shown in FIG. 23, the hydronic system 2 includes a tube 20 (hydronic tubing) to carry water or other heat-exchanging fluid for heat transfer. The hydronic system 2 includes a heater 3 to heat the water. The hydronic system includes a pump 4 to pump the water from the heater 3 through a main supply line 5 to a manifold or valve subsystem 6 that distributes water to the various zones of the dwelling depending on heat demand, e.g. in response to a thermostat setting in the dwelling. The hydronic system 2 may include a controller 7 to control the heater and/or pump to supply water at a desired temperature and/or flow rate. The hydronic system includes one or more of the various brackets 100, 200, 300, 400 described above for supporting the tubing 20 and fins160 above a tubular brace 30 for heat exchange between the joists 14 below the floor 11.

For the purposes of interpreting this specification, when referring to elements of various embodiments of the present invention, the articles "a", "an", "the" and "said" are intended to mean that there are one or more of the elements. The terms "comprising", "including", "having", "entailing" and "involving", and verb tense variants thereof, are intended to be inclusive and open-ended by which it is meant that there may be additional elements other than the listed elements.

This invention has been described in terms of specific implementations and configurations which are intended to be exemplary only. Persons of ordinary skill in the art will appreciate that many obvious variations, refinements and modifications may be made without departing from the inventive concepts presented in this application. The scope of the exclusive right sought by the Applicant(s) is therefore intended to be limited solely by the appended claims.

## Claims

1. A hydronic system comprising:
a tube (20) to carry water for heat transfer, wherein the tube (20) either extends in an inter-joist space beneath a floor between a first joist (14) and a second joist (14) or extends in a wall space between a first stud (12) and a second stud (12);
a tubular brace (30) extending either from the first joist (14) to the second joist (14) or from the first stud (12) to the second stud (12); and
a pair of surface-mountable tube-supporting brackets mounted to surfaces of the first and second joists (14), or to surfaces of the first and second studs (12), wherein each of the pair of surface-mountable tube-supporting brackets has a tube-gripping portion to receive and grip the tubular brace (30).

2. The hydronic system of claim 1 wherein the tubular brace (30) is a segment of tubing identical to the tube used to carry the water.

3. The hydronic system of claim 1 wherein the tube-gripping portion defines an average internal diameter D1 and an outer diameter D2 that ranges from 1.4 to 1.8 times D1 being made of a material having a modulus of elasticity ranging from 600 to 1150 MPa.

4. The hydronic system of claim 2 wherein the tube (20) is crosslinked polyethylene (PEX) tubing.

5. The hydronic system of claim 1 wherein the tube-gripping portion comprises a mouth region that flexes open to receive and grip the tube.

6. The hydronic system of claim 1 wherein the tube-gripping portion comprises a teeth, grooves or ridges to grip the tube.

7. The hydronic system of claim 1 wherein each of the surface-mountable tube-supporting brackets comprises a body and a C-shaped tube-gripping portion, wherein the body is flat to abut a surface of the stud or joist and wherein the body comprises a first hole in a first direction and a second hole in a second direction that is orthogonal to the first direction.

8. The hydronic system of claim 1 further comprising a tube-to-tube bracket comprising a first tube-gripping portion for attaching to the tubular brace and further comprising a second tube-gripping portion oriented orthogonally to the first tube-gripping portion to receive and grip the tube.

9. The hydronic system of claim 1 further comprising an inverted J-shaped box-supporting bracket a tube-gripping portion to attach to the tubular brace and a straight portion having a hole for receiving a fastener to fasten a box to the box-supporting bracket.

10. The hydronic system of claim 1 further comprising a curved tube-supporting bracket having a first annular collar and a second annular collar aligned with and spaced apart from the first annular collar, thereby defining a gap between the first and second annular collars to receive a tube-to-tube bracket in the gap between the first and second annular collars, a curved guide portion for supporting an underside of the tube, while bending the tube over a predetermined angle, and a lower restraint to restrain the tube, wherein the tube-to-tube bracket has a tube-gripping portion to grip the tubular brace.

11. A method of installing a hydronic system, the method comprising:
mounting a pair of surface-mountable tube-supporting brackets to surfaces of the first and second joists (14), or to surfaces of the first and second studs (12), wherein each of the pair of surface-mountable tube-supporting brackets each has a tube-gripping portion to receive and grip a tubular brace (30).
attaching the tubular brace to the tube-gripping portion of each of the surface-mountable tube-supporting brackets such that the tubular brace (30) extends between the first and second joists (14) or between the first and second studs (12);
attaching a first tube-gripping portion of a tube-to-tube bracket to the tubular brace (30); and
attaching a tube for carrying water to a second tube-gripping portion of the tube-to-tube bracket.

12. The method of claim 11 comprising affixing heat-exchanging fins to the tube by disposing semi-circular troughs of the fins along the tube.

13. The method of claim 12 comprising affixing the fins to the tube using twist clips by inserting the twist clips through slots in the fins and rotating the twist clips to secure the fins to the tube.

14. The method of claim 11 comprising attaching a tube-gripping portion of an inverted J-shaped box-supporting bracket to the tubular brace and fastening a box to the box-supporting bracket through a hole in a straight portion extending from the tube-gripping portion.

15. The method of claim 11 further comprising providing a curved tube-supporting bracket having a first annular collar and a second annular collar aligned with and spaced apart from the first annular collar, thereby defining a gap between the first and second annular collars, inserting a tube-to-tube bracket in the gap between the first and second annular collars, attaching a tube-gripping portion of the tube-to-tube bracket to the tubular brace, placing the tube over a curved guide portion for supporting an underside of the tube, while bending the tube over a predetermined angle.
